# EUROPEAN PATENT APPLICATION

(11) **EP 1 158 513 A2**
(43) Date of publication of application: **28.11.2001**
(21) Application number: 01112065.6
(22) Date of filing: 25.05.2001
(51) Int. Cl.: G11B 20/00

(54) **Contents recording method, contents reproduction method, contents recorder, contents reproducer, and recording medium**

(30) Priority: 25.05.2000 JP 2000154326; 28.06.2000 JP 2000194148; 26.05.2000 JP 2000156022; 28.06.2000 JP 2000194147
(71) Applicant: VICTOR COMPANY OF JAPAN LIMITED, Yokohama-Shi Kanagawa-Ken (JP)
(72) Inventor: Inoha, Wataru, Yokosuka-shi, Kanagawa-ken (JP); Higurashi, Seiji, Fuchu-shi, Tokyo (JP); Sugahara, Takayuki, Yokosuka-shi, Kanagawa-ken (JP); Kuroda, Yoshiro, Yokohama-shi, Kanagawa-ken (JP)
(74) Representative: HOFFMANN - EITLE

(57) **Abstract**

A method according to the present invention starts reproduction of contents (15) while contents validity is verified based on signature information (24). If it is found that the contents are invalid as a result of contents validity verification based on the signature information, the method stops the reproduction of contents and inhibits subsequent reproduction. The method may verify the validity only when a flag (20) indicates that the signature information for contents validity to be reproduced is present. Also, the method may compare an invalid signature information entry ( 30 ) recorded in signature information memory (28) with the signature information (24) read from the recording medium (12). If the signature information memory contains an entry that matches the signature information, the method does not request a signature verification unit (22) to verify the contents of the signature but determines the contents (15) as invalid.

## Description

### BACKGROUND OF THE INVENTION

### 1. Field of the Invention

The present invention relates to a contents recording method, a contents reproduction method, a contents recorder, a contents reproducer, and a recording medium for verifying the validity of contents at reproduction time based on signature information. More particularly, an object of the present invention is to provide a contents recording method, a contents reproduction method, a contents recorder, a contents reproducer, and a recording medium that avoid the inconvenience that the user must wait until the validity verification result is produced before valid contents are reproduced, that limit the reproduction of invalid contents, and that reduce the contents validity verification time required for determining that contents are invalid -- all without having to increase the contents validity verification ability of the reproducer.

### 2. Description of the Related Art

One of effective method for preventing the use of a recording medium to which copyrighted digital contents are illegally copied is to authenticate a signature. According to this method, the recording medium contains digital contents as well as signature information indicating that the recording medium or the contents are valid. Before the user performs reproduction operation, the digital contents reproducer verifies the signature and, only when it is valid, permits the user to reproduce the digital contents. Also, as disclosed in Japanese Patent Laid-Open Publication No.2000-22680, a technology for reflecting the signature verification result on whether or not a key, which is used for decrypting partially-encrypted digital contents, may be decrypted.

However, an attempt to maintain copyright protection ability at a specific level with the signature method used in the methods described above would increase the amount of data required for signature information and, in addition, make verification operation more complex. Unlike a personal computer (PC), most digital contents reproducers available to general users are less powerful for signature verification and, therefore, require considerable time to verify large-volume signature information (verification of signature information contents themselves). Conventionally, such time-consuming signature verification (verification of signature information contents themselves) is executed each time contents are reproduced and, therefore, considerable time is always required to produce the verification result indicating whether the contents are valid. In particular, even if the contents are valid, it takes a great while from the time the user starts reproduction to the time the contents are displayed. The user must wait long until the verification result indicating the validity of the contents is obtained. A CPU or memory, if added in an attempt to increase the processing power of signature verification, would increase the reproducer cost.

### SUMMARY OF THE INVENTION

It is an object of the present invention to provide a contents recording method, contents reproduction method, contents recorder, contents reproducer, and recording medium that avoid the inconvenience that the user must wait until the validity verification result is produced before valid contents are reproduced, that limit the reproduction of invalid contents, and that reduce the contents validity verification time required for determining that contents are invalid -- all without having to increase the contents validity verification ability of the reproducer.

It is another object of the present invention to provide a contents reproduction method and a contents reproducer that avoid the inconvenience that the user must wait until the validity verification result is produced before valid contents are reproduced, and that limit the reproduction of invalid contents without having to increase the contents validity verification processing ability (verification of signature information contents themselves).

To solve the above problems, there is provided a contents recording method for recording contents, signature information, and a flag on a recording medium, the signature information indicating a validity of the contents, the flag indicating that the signature information is recorded.

Also, to solve the above problems, there is provided a contents reproduction method wherein a reproduction of contents is started while a validity of the contents to be reproduced is verified and wherein, if the contents are determined as invalid as a result of the verification of the validity of the contents, the reproduction of the contents is stopped and the reproduction is inhibited.

In a preferred embodiment of the present invention, if a flag is detected, the verification of the validity of the contents based on signature information indicating the validity of the contents is started, the flag indicating that the signature information is present.

Also, to solve the above problems, there is provided a contents recorder comprising a recorder recording contents, signature information, and a flag on a recording medium, the signature information indicating a validity of the contents, the flag indicating that the signature information is recorded.

Also, to solve the above problems, there is provided a contents reproducer comprising a verification unit verifying a validity of contents to be reproduced; and a reproduction unit starting a reproduction of the contents while the verification unit verifies the validity of the contents and, if the contents are determined as invalid as a result of the verification, stopping the reproduction.

In a preferred embodiment of the present invention, if a flag is detected, the verification unit verifies the validity of the contents based on signature information indicating the validity of the contents to be reproduced, the flag indicating that the signature information is present.

Also, to solve the above problems, there is provided a recording medium on which contents, signature information indicating a validity of the contents, and a flag indicating that the signature information is recorded, are recorded.

In a preferred embodiment of the present invention, the signature information is signature information using a digital signature method.

Also, to solve the above problems, there is provided a contents reproduction method for verifying a validity of contents to be reproduced, based on signature information indicating the validity of the contents, for controlling the reproduction of the contents, wherein the verification of the validity of the contents based on the signature information comprises the steps of: comparing invalid signature information entries pre-stored in an internal memory with the signature information; if the internal memory contains an invalid signature information entry that matches the signature information, skipping a verification of the signature information but determining the contents as invalid; and if the internal memory does not contain an invalid signature information entry that matches the signature information, verifying the signature information and, if the contents are determined as invalid, storing the signature information in the internal memory as a new invalid signature information entry; and wherein, if the contents are determined as invalid as a result of the verification of the validity of the contents, the reproduction of the contents is inhibited.

In a preferred embodiment of the present invention, the reproduction of the contents is started while the validity of the contents to be reproduced is verified.

In a preferred embodiment of the present invention, if a flag is detected, the verification of the validity of the contents based on the signature information indicating the validity of the contents to be produced is started, the flag indicating that the signature information is present.

Also, to solve the above problems, there is provided a contents reproducer comprising: a verification unit verifying a validity of contents to be reproduced, based on signature information indicating the validity of the contents; an internal memory containing at least one invalid signature information entry corresponding to invalid contents; a comparison unit comparing the signature information with the at least one invalid signature information entry; and a reproduction unit reproducing the contents, wherein, if it is found, as a result of comparison by the comparison unit, that the internal memory contains an invalid signature information entry that matches the signature information, the verification unit skips a verification of the signature information but determines the contents as invalid; and if the internal memory does not contain an invalid signature information entry that matches the signature information, the verification unit verifies the signature information and, if the contents are determined as invalid, stores the signature information in the internal memory as a new invalid signature information entry, and wherein, if the contents are determined as invalid as a result of the verification of the validity of the contents, the reproduction unit inhibits the reproduction of the contents.

In a preferred embodiment of the present invention, the reproduction unit starts the reproduction of the contents while the validity of the contents to be reproduced is verified.

In a preferred embodiment of the present invention, if a flag is detected, the verification unit verifies the validity of the contents based on the signature information indicating the validity of the contents to be reproduced, the flag indicating that the signature information is present.

The nature, principle and utility of the invention will become more apparent from the following detailed description when read in conjunction with the accompanying drawings.

### BRIEF DESCRIPTION OF THE DRAWINGS

In the accompanying drawings:
FIG.1 is a block diagram showing a first embodiment of the present invention.
FIG.2 is a flowchart showing the main operation of the first embodiment shown in FIG.1.
FIG.3 is a block diagram showing a second embodiment of the present invention.
FIG.4 is a block diagram showing a third embodiment of the present invention.
FIG.5 is a flowchart showing the main operation of the second embodiment shown in FIG.3.

### DESCRIPTION OF THE PREFERRED EMBODIMENTS

### <First embodiment>

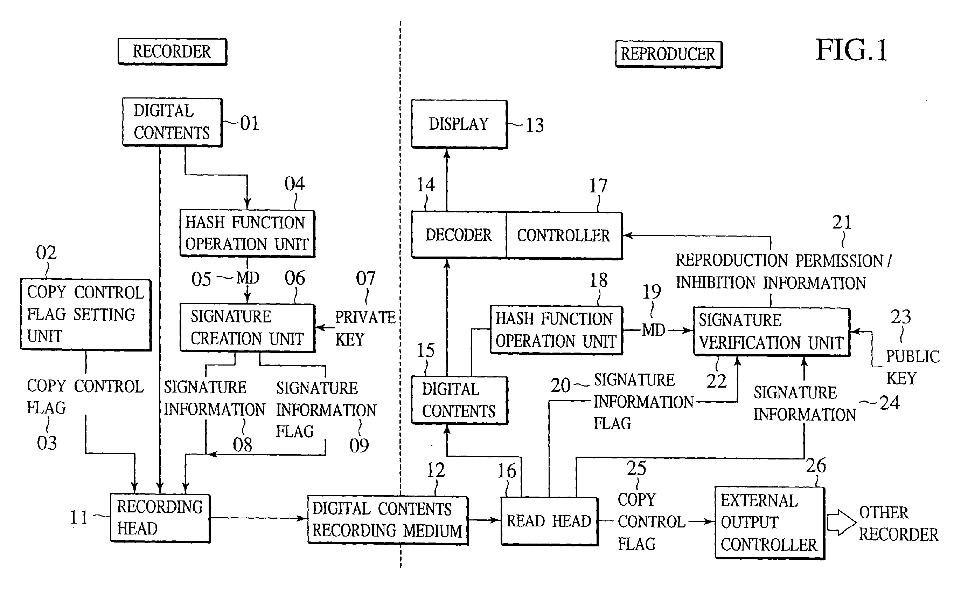

A first embodiment of the present invention will be described below with reference to FIG.1.

In FIG.1, a recording medium 12 on which digital contents are recorded may be any of a magnetic tape, optical disc, or semiconductor memory. Recorded digital contents may be any digital data such as video, sound, or PC programs.

In FIG.1, a recorder records digital contents 01, a copy control flag 03, signature information 08, and signature information flag 09 on the recording medium 12 with a recording head 11. The copy control flag 03 indicates whether the digital contents 01 recorded on the recording medium 12 maybe digitally copied. This flag is set by a copy control flag setting unit 02, for example, according to the CGMS (Copy Generation Management System).

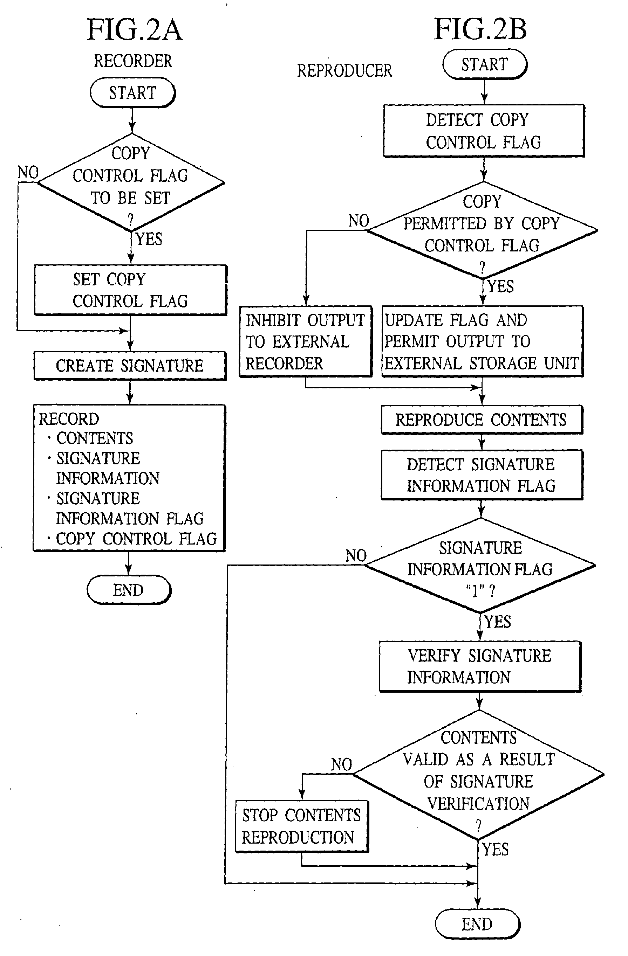

The signature information 08 indicates the validity of the recorded digital contents 01. This signature information 08 is created for a message digest (MD) 05, which is created from the digital contents 01 by a hash operation unit 04, using a private key 07 of a copyright holder according to one of general digital signature methods (for example, RSA(named after Ron Rivest, Adi Shamir, and Len Adleman), DSS (Digital Signature Standard)). The signature information flag 09 indicates whether the signature information 08 is recorded. When this one-bit binary information is 0, the signature information is not written; when this information is 1, the signature information is written. A signature creation unit 06 creates the signature information 08 and the signature information flag 09. FIG.2A shows the operation flowchart of this recorder.

Next, a reproducer will be described with reference to FIG.1. FIG.2B is a diagram showing the operation flow of the reproducer.

The reproducer that reproduces data from the recording medium 12 first reads digital contents 15, a signature information flag 20, and a copy control flag 25 from the recording medium 12 with a read head 16. (Note that the digital contents 01, copy control flag 03, signature information 08, and signature information flag 09 recorded on the recording medium 12 correspond, respectively, to the digital contents 15, copy control flag 25, signature information 24, and signature information flag 20).

If the signature information flag 20 is 0, the signature information is not recorded on the recording medium 12. Therefore, a signature verification unit 22 causes a decoder 14 to reproduce the digital contents 15.

If the signature information flag 20 is 1, the signature verification unit 22 starts verifying whether the contents 15 are valid based on the signature information and, at the same time, causes the decoder 14 to start reproducing the contents 15. To verify validity, the signature information 24 is read from the recording medium 12 and, at the same time, an MD 19 is created from the digital contents 15 with a hash function operation unit 18. The signature verification unit 22 verifies the MD 19 and the signature information 24 with a public key 23 of the copyright holder. If it is found that the contents are valid as a result of verification, the signature verification unit 22 sends reproduction permission/inhibition information 21 to a controller 17 requesting that contents reproduction, which has already been started, be continued. Upon receiving this information, the controller 17 controls the decoder 14 to continue reproduction.

On the other hand, if it is found that the contents are invalidas aresult of verification, the signature verification unit 22 sends the reproduction permission/inhibition information 21 to the controller 17 requesting that the reproduction of contents 15, which has already been started, be stopped. Upon receiving this information, the controller 17 controls the decoder 14 to stop decoding and inhibits reproduction thereafter. At this time, a message indicating that the contents are invalid may be displayed on a display 13 to notify the user.

An external output controller 26 checks the copy control flag 25 read from the recording medium 12 to determine if the contents may be digitally copied. If the contents may be digitally copied, the controller outputs the contents to some other recorder.

### <Second embodiment>

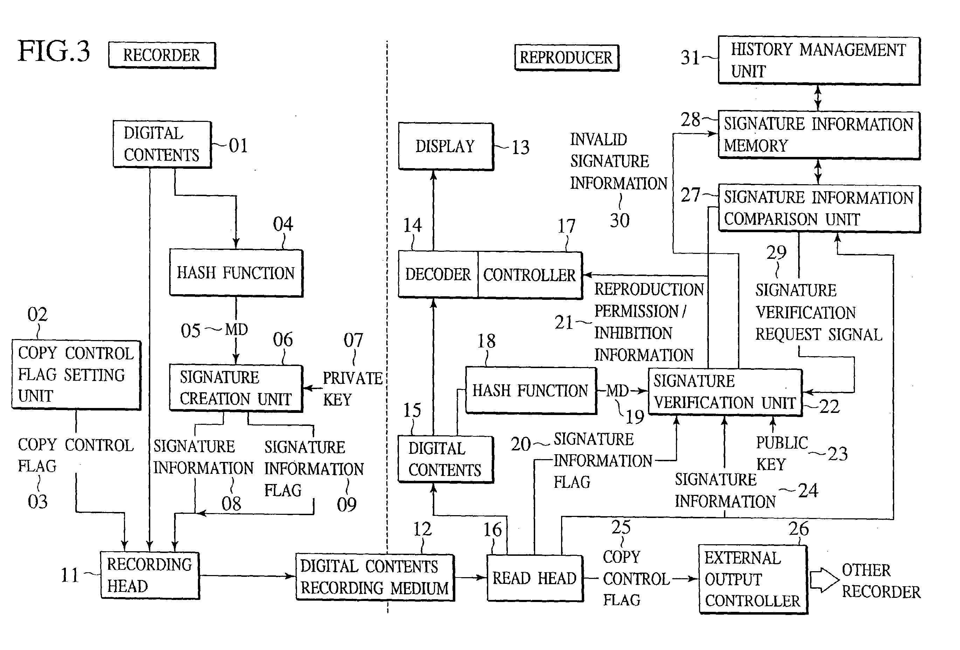

A second embodiment of the present invention will be described below with reference to FIG.3.

Because the configuration of the recorder in FIG.3 is the same as that of the recorder in FIG.1, its description is omitted.

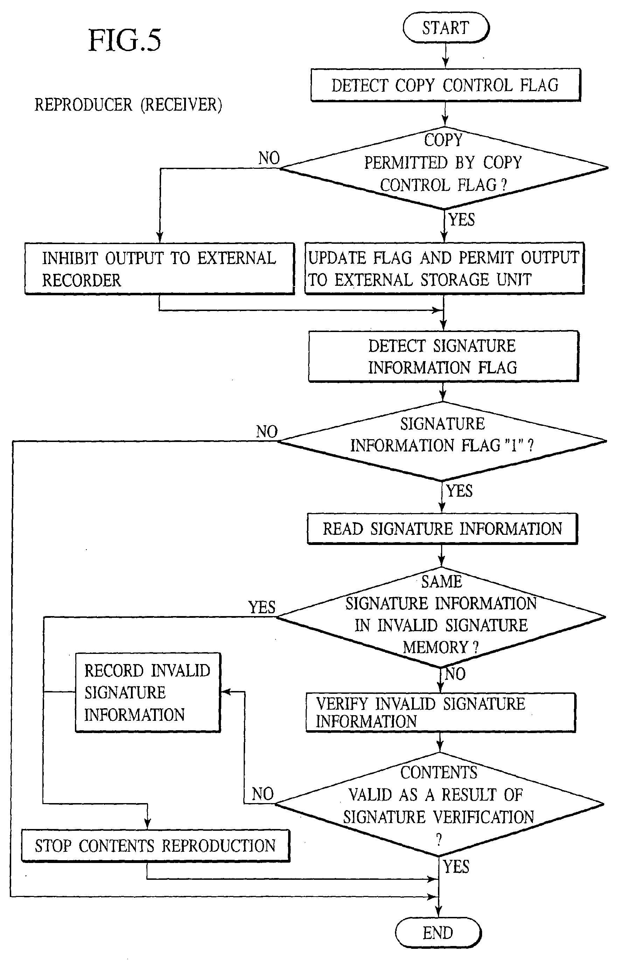

Next, the reproducer in FIG.3 will be described. FIG.5 is a flowchart showing the operation of the reproducer.

The reproducer that reproduces data from the recording medium 12 first reads digital contents 15, signature information flag 20, and the copy control flag 25 from the recording medium 12 with the read head 16. (Note that the digital contents 01, copy control flag 03, signature information 08, and signature information flag 09 recorded on the recording medium 12 correspond, respectively, to the digital contents 15, copy control flag 25, signature information 24, and signature information flag 20).

When the signature information flag 20 is 0, the signature information is not recorded on the recording medium 12. Therefore, the signature verification unit 22 causes the decoder 14 to reproduce the digital contents 15.

If the signature information flag 20 is 1, the signature verification unit 22 starts verifying whether the contents 15 are valid based on the signature information and, at the same time, causes the decoder 14 to start reproducing the contents 15. To verify validity, the signature information 24 is first read from the recording medium 12 and supplied to the signature verification unit 22 (verification unit that verifies the contents themselves of the signature information) and a signature information comparison unit 27.

The signature information comparison unit 27 compares invalid signature information entries recorded in a signature information memory 28, where two or more invalid signature information entries may be stored, with the signature information 24 read from the recording medium 12. If the signature information 24 read from the recording medium 12 matches one of information entries contained in the signature information memory 28, the signature verification unit 22 does not verify the contents of the signature information 24. Instead, the signature information comparison unit 27 determines the contents 15 as invalid. Then, the signature information comparison unit 27 sends a signal to the decoder controller 17 as the reproduction permission/inhibition information 21 to request that the contents reproduction be stopped and the reproduction be inhibited thereafter.

On the other hand, if the signature information memory 28 does not contain an invalid signature information entry that matches the signature information 24, the signature information comparison unit 27 sends the signature verification request signal to the signature verification unit 22.

In response to the signature verification request signal, the signature verification unit 22 uses the public key 23 of the copyright holder to verify the MD 19, which is created from the digital contents 15 by the hash function operation unit 18, and the signature information 24. If it is found, as a result of verification, that the contents are valid, the signature verification unit 22 sends the reproduction permission/inhibition information 21 to the decoder controller 17 to permit the reproduction of the contents, which has already been started, to be continued. The decoder controller 17 controls the decoder 14 to continue reproduction.

If it is found, as a result of signature contents verification, that the contents are invalid, the signature verification unit 22 sends a signal to the decoder controller 17 as the reproduction permission/inhibition information 21 to request that the contents reproduction be stopped and the reproduction be inhibited thereafter.

At the same time, the signature verification unit 22 sends the signature information 24, determined as invalid, to the signature information memory 28 to store it as an invalid signature information entry 30. The signature information memory 28 sends the signal to a history management unit 31 to indicate that an invalid signature information entry has been received. If the signature information memory 28 has an area available for recording invalid signature information entries, the invalid signature information entry 30 is recorded there. If no area is available for recording invalid signature information entries, the invalid signature information entries are erased from the signature information memory 28 sequentially from the oldest one (invalid signature information entry recorded first) and the new invalid signature information entry 30 is recorded.

If it is found that the contents are invalid, a message indicating that the contents are invalid may be displayed on the display 13 to notify the user.

The external output controller 26 checks the copy control flag 25 read from the recording medium 12 to determine if the contents may be digitally copied. If the contents may be digitally copied, the controller outputs the contents to some other recorder.

In the embodiment described above, digital contents are recorded without being encrypted. At least part of the digital contents may be encrypted before recording, and decrypted by the reproducer.

As described above, the method used in the embodiment compares the invalid signature information entries stored in the signature information memory 28 with the signature information 24 read from the recording medium. If the signature information memory 28 contains an invalid signature information entry that matches the signature information 24, the contents 15 are determined as invalid without having to verify the signature information 24 by the signature verification unit 22. Therefore, this eliminates the need for verifying the contents of signature information each time reproduction is executed, reducing the time needed to verify the contents validity.

Because the signature information memory 28 may contain two ormore invalid signature information entries, the checking for invalid signature information described above may be performed for a plurality of invalid signature information entries.

In the embodiment described above, contents reproduction is started at the same time contents validity verification is started at reproduction time based on the signature information. Therefore, without having to increase the contents validity verification power of the reproducer, the embodiment avoids the inconvenience that the user must wait until the result of contents validity verification is obtained. Of course, for invalid contents, reproduction is stopped immediately when the validity verification result is obtained and the subsequent reproduction is inhibited to fully protect copyright.

In addition, contents reproduction is started at the same time contents validity verification is started. This gives some time to contents validity verification. That is, authentication, which involves vast amount of calculation and therefore requires a fast CPU, may be executed by a CPU that is not so fast (a relatively low-priced CPU). On the other hand, a fast CPU, if used, could further increase the copyright protection power and process more signature information. In addition, the embodiment allows signature information to be distributed on a recording medium that requires some time to read data therefrom (divided recording of signature information). As a result, on a tape recording medium such as a video tape, there is no need for recording signature information in all parts of the medium on which contents are recorded. (Conventionally, signature must be recorded in all parts where contents are recorded so that signature information may be read immediately even if reproduction starts in any part of a tape recording medium such as a reel of video tape)

In the above embodiment, the signature information flag 20 is used to allow the presence of signature information to be immediately determined and, as a result, contents reproduction to be started as soon as possible. Instead of using the signature information flag 20, the actual signature information itself may be searched for from the recording medium.

In the embodiment described above, digital contents are recorded without being encrypted. At least part of the digital contents may be encrypted before recording, and decrypted by the reproducer.

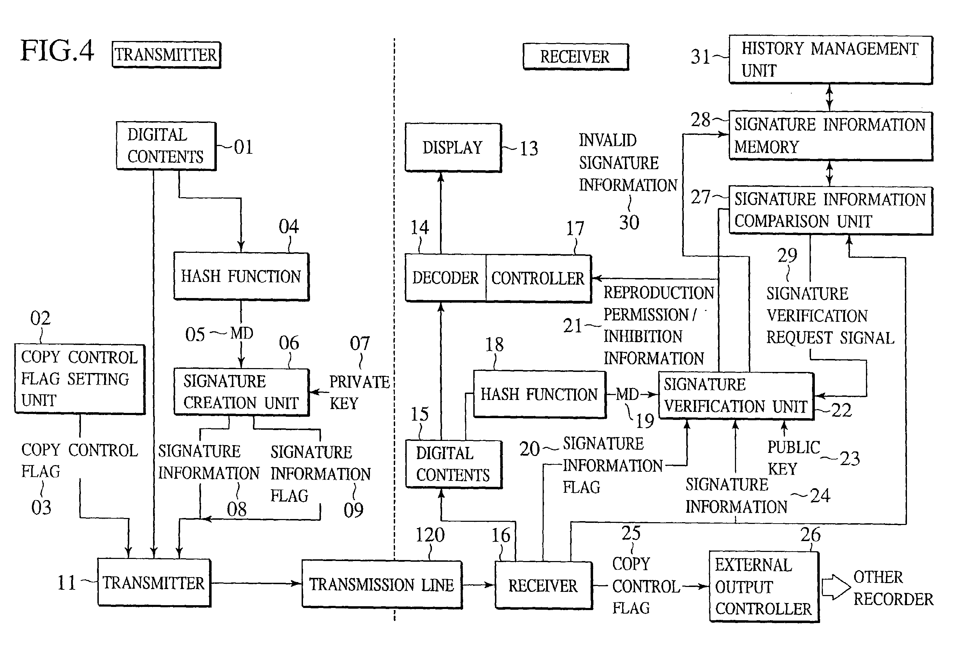

Also, in the above embodiment, various types of information such as the digital contents, copy control flag, signature information, and signature information flag are recorded on a recording medium. As shown in a third embodiment shown in FIG.4, these types of information may be transmitted, not via a recording medium, but directly to the reproducer, for example, via communication or broadcasting (The third embodiment shown in FIG.4 is similar to the second embodiment shown in FIG.3 except that the recording medium 12 used in the second embodiment shown in FIG.3 has been changed to a transmission line 120).

To further increase the copyright protection ability, the embodiment may be modified such that a recording medium containing the contents, which are once identified as invalid as a result of signature verification, must be removed from the reproducer before the reproducer accepts the next reproduction request that will be issued. Or, the embodiment may be modified such that, even if the recording medium is not removed from the reproducer, the reproducer does not accept the next reproduction request before a predetermined period of time elapses.

In addition, with more emphasis on the copyright protection ability, the embodiment may be modified such that the contents are not reproduced until the result of contents validity verification based on signature information is obtained and, when the contents are determined as invalid, the reproduction inhibition signal is sent to the controller 17 as the reproduction permission/inhibition information 21.

As described above, the present invention has the following advantages:
(a) At reproduction time, the method according to the present invention starts contents reproduction at the same time it starts contents validity verification based on signature information. Therefore, without having to increase the contents validity verification processing ability, the method avoids the inconvenience that the user must wait until the validity verification result is produced before valid contents are reproduced. Of course, for invalid contents, reproduction is stopped immediately when the validity verification result is obtained and the subsequent reproduction is inhibited to fully protect copyright.
(b) At reproduction time, the method according to the present invention starts contents reproduction at the same time it starts contents validity verification based on signature information. This gives some time to contents validity verification. That is, authentication, which involves vast amount of calculation and therefore requires a fast CPU, may be executed by a CPU that is not so fast (a relatively low-priced CPU). On the other hand, a fast CPU, if used, could further increase the copyright protection power and process more signature information. In addition, the method allows signature information to be distributed on a recording medium that requires some time to read data therefrom (divided recording of signature information). As a result, on a tape recording medium such as a video tape, there is no need for recording signature information in all parts of the medium on which contents are recorded.
(c) The signature information flag, if provided, allows the presence of signature information to be immediately determined. As aresult, contents reproduction may be started as soon as possible.
(d) The method according to the present invention compares the invalid signature information entries stored in the signature information memory with the signature information read from the recording medium. If the signature information memory contains an invalid signature information entry that matches the signature information, the contents are determined as invalid without having to verify the signature information by the signature verification unit. Therefore, this eliminates the need for verifying the contents of signature information each time reproduction is executed, reducing the time needed to verify the contents validity.

It should be understood that many modifications and adaptations of the invention will become apparent to those skilled in the art and it is intended to encompass such obvious modifications and changes in the scope of the claims appended hereto.

## Claims

1. A contents recording method for recording contents, signature information, and a flag on a recording medium, said signature information indicating a validity of the contents, said flag indicating that the signature information is recorded.

2. A contents reproduction method wherein a reproduction of contents is started while a validity of the contents to be reproduced is verified and wherein, if the contents are determined as invalid as a result of the verification of the validity of the contents, the reproduction of the contents is stopped and the reproduction is inhibited.

3. The contents reproduction method according to claim 2 wherein, if a flag is detected, the verification of the validity of the contents based on signature information indicating the validity of the contents is started, said flag indicating that the signature information is present.

4. A contents recorder comprising a recorder recording contents, signature information, and a flag on a recording medium, said signature information indicating a validity of the contents, said flag indicating that the signature information is recorded.

5. A contents reproducer comprising:
a verification unit (22) verifying a validity of contents to be reproduced; and
a reproduction unit (14) starting a reproduction of the contents while said verification unit (22) verifies the validity of the contents and, if the contents are determined as invalid as a result of the verification, stopping the reproduction.

6. The contents reproducer according to claim 5 wherein, if a flag (09:20) is detected, said verification unit (22) verifies the validity of the contents based on signature information indicating the validity of the contents to be reproduced, said flag (09:20) indicating that the signature information is present.

7. A recording medium on which contents, signature information indicating a validity of the contents, and a flag indicating that the signature information is recorded, are recorded.

8. The recording medium according to claim 7 wherein the signature information is signature information using a digital signature method.

9. A contents reproduction method for verifying a validity of contents to be reproduced, based on signature information indicating the validity of the contents, for controlling the reproduction of the contents,
wherein the verification of the validity of the contents based on the signature information comprises the steps of: comparing invalid signature information entries (30) pre-stored in an internal memory (28) with the signature information (08:24); if the internal memory (28) contains an invalid signature information entry (30) that matches the signature information (08:24), skipping a verification of the signature information but determining the contents as invalid; and if the internal memory (28) does not contain an invalid signature information entry (30) that matches the signature information (08:24), verifying the signature information and, if the contents are determined as invalid, storing the signature information in said internal memory (28) as a new invalid signature information entry (30); and
wherein, if the contents are determined as invalid as a result of the verification of the validity of the contents,
the reproduction of the contents is inhibited.

10. The contents reproduction method according to claim 9 wherein the reproduction of the contents is started while the validity of the contents to be reproduced is verified.

11. The contents reproduction method according to claim 9 wherein, if a flag (09:20) is detected, the verification of the validity of the contents based on the signature information (08:24) indicating the validity of the contents to be produced is started, said flag (09:20) indicating that the signature information is present.

12. The contents reproduction method according to claim 10 wherein, if a flag (09:20) is detected, the verification of the validity of the contents based on the signature information (08:24) indicating the validity of the contents to be produced is started, said flag (09:20) indicating that the signature information is present.

13. A contents reproducer comprising:
a verification unit (22) verifying a validity of contents to be reproduced, based on signature information (08:24) indicating the validity of the contents;
an internal memory (28) containing at least one invalid signature information entry (30) corresponding to invalid contents;
a comparison unit (27) comparing the signature information (08:24) with said at least one invalid signature information entry (30); and
a reproduction unit (14) reproducing the contents,
wherein, if it is found, as a result of comparison by said comparison unit, that the internal memory (28) contains an invalid signature information entry (30) that matches the signature information (08:24), said verification unit (22) skips a verification of the signature information but determines the contents as invalid; and if the internal memory (28) does not contain an invalid signature information entry (30) that matches the signature information (08:24), said verification unit (22) verifies the signature information (08:24) and, if the contents are determined as invalid, stores the signature information (08:24) in said internal memory (28) as a new invalid signature information entry (30), and wherein, if the contents are determined as invalid as a result of the verification of the validity of the contents, said reproduction unit inhibits the reproduction of the contents.

14. The contents reproducer according to claim 13 wherein said reproduction unit (14) starts the reproduction of the contents while the validity of the contents to be reproduced is verified.

15. The contents reproducer according to claim 13 wherein, if a flag (09:20) is detected, said verification unit (22) verifies the validity of the contents based on the signature information (08:24) indicating the validity of the contents to be reproduced, said flag (09:20) indicating that the signature information is present.

16. The contents reproducer according to claim 14 wherein, if a flag (09:20) is detected, said verification unit (22) verifies the validity of the contents based on the signature information indicating (08:24) the validity of the contents to be reproduced, said flag (09:20) indicating that the signature information is present.
